# EUROPEAN PATENT SPECIFICATION

(11) **EP 0 694 956 B1**
(45) Date of publication and mention of the grant of the patent: **12.06.2002**
(21) Application number: 95304921.0
(22) Date of filing: 13.07.1995
(51) Int. Cl.: H01J 61/56

(54) **Discharge lamp**
Entladungslampe
Lampe à décharge

(30) Priority: 20.07.1994 HU 9402141
(43) Date of publication of application: 31.01.1996
(73) Proprietor: TUNGSRAM Részvénytársaság, H-1340 Budapest IV (HU)
(72) Inventor: Fülöp, Jozsef, H-1171 Budapest (HU); Wursching, Istvan, H-1051 Budapest (HU)
(74) Representative: Pratt, Richard Wilson

(56) References cited:
- EP-A- 0 534 728
- EP-A- 0 622 822
- DE-A- 19 509 112
- DE-U- 8 431 416
- US-A- 4 688 874
- US-A- 4 746 835
- PATENT ABSTRACTS OF JAPAN vol. 014, no. 357 (M-1005), 2 August 1990 & JP 02 126504 A (TOSHIBA CORP;OTHERS: 02), 15 May 1990,

## Description

The present invention relates to a discharge lamp having a ballast housing. More particularly, the invention relates to fixing a circuit board in the housing.

It is known to provide a single-ended discharge lamp having a housing containing circuitry (a ballast) for energising the lamp. The discharge lamp comprises a discharge tube containing a fill and sealed in a gas-tight manner. The ballast circuitry is mounted in the ballast housing on a circuit board. The ballast housing has a housing and a shell fixed to each other. The discharge tube is supported by the shell. The circuit board is fixed within the ballast housing. The ballast housing supports a lamp cap for mechanical and electrical connection to a lamp socket. The ballast circuitry is electrically coupled to the discharge tube and to the lamp cap.

In a commercially available compact fluorescent lamp, the circuit board is arranged with its plane parallel to the axis of discharge lamp axis, fixed in a slot between supports formed in the shell. A similar arrangement is described in EP-A-0,622,822. A compact fluorescent lamp with a circuit board arranged with its plane perpendicular to the lamp axis, and secured between ridges, is described in US-A-4,746,835. The width of the slot is chosen according to the thickness of the circuit board. Due to variations in the dimensions of the circuit board this method of fixing the circuit board can cause problems. If the circuit board is too thin it can leave the slot during assembly of the ballast housing. If the circuit board is too thick, it does not fit correctly in the slot. As a result it may not be possible to connect the housing to the shell.

Aspects of the invention are specified in the claims.

According to an aspect of the present invention, there is provided a single-ended discharge lamp with a circuitry being entirely or partly in its ballast housing, which discharge lamp comprises a discharge tube provided with electrodes, containing a fill and sealed in a gas-tight manner and also comprises a ballast housing comprising a circuitry mounted on a circuit board providing for the operation of the discharge tube where the ballast housing is formed in a way suitable for mechanical and electrical connection to a lamp socket on one part, and for mechanically fixing the discharge tube and connecting the output terminals of the circuitry to the electrode inleads of the discharge tube on the other part, the ballast housing being built from two parts - a housing and a shell - fixed to each other and the circuit board is inserted between supports of plane surface formed in the inside of and protruding from one part of the ballast housing, and on the support(s), longitudinal rib(s) protruding from the surface thereof is (are) formed, which support and rib are dimensioned so that in the direction of the circuit board insertion the space available for the circuit board decreases more and more, and due to this the circuit board gets stuck by the rib over at least a part of its length.

The decreasing space can be produced by gradually increasing - in the direction of insertion - the extent to which the rib protrudes from the support, or by inclining the surface carrying the rib to the plane of the circuit board. The supports together with the ribs protruding from their surface are preferably so dimensioned to fit to the tolerance range of the circuit board, i.e. circuit boards with dimensions at the lower side of the tolerance range can get stuck by the ribs at their ends while circuit boards with dimensions at the upper side of the tolerance range can still be inserted between the ribs.

The rib or ribs preferably have a triangular cross-section.

The circuit board may be placed in the ballast housing perpendicular to or parallel to the axis of the discharge lamp and the supports are oriented accordingly. When the circuit board is in the ballast housing perpendicular to the axis of the discharge lamp, it is preferable to make a notch in the circuit board and the edges of the notch engage by ribs. When the circuit board is in the ballast housing in parallel to the axis of the discharge lamp, the major plane surface of the circuit board engages the rib.

A rib may be on only one of the supports into which the circuit board is inserted but it is preferable to have a rib on both supports.

Two supports are preferably placed on each opposite side of the ballast housing.

The supports into which the circuit board is inserted can be in the shell and/or in the housing.

For a better understanding of the present invention, reference will now be made by way of example to the accompanying drawings, in which:
FIGURE 1 is a partial sectional view of a discharge lamp according to the invention where the circuit board is perpendicular to the axis of the discharge lamp and a holder supporting the circuit board is in a shell of the ballast housing;
FIGURE 2 is a partial sectional view of another discharge lamp according to the invention where the circuit board is parallel to the axis of the discharge lamp and the holder supporting the circuit board is in the shell;
FIGURE 3 is a partial view, from below, of the circuit board holder of the discharge lamp of Figure 1;
FIGURE 4 is a sectional view taken along Section A-A of Figure 3;
FIGURE 5 shows detail C of Figure 3;
FIGURE 6 is a partial view, from below, of the circuit board holder of the discharge lamp of Figure 2;
FIGURE 7 is a sectional view taken along Section B-B of Figure 6;
FIGURE 8 is a cross-sectional view of the housing of a further discharge lamp according to the invention, where the circuit board is perpendicular to the axis of the lamp and the circuit board holder is in a housing;
FIGURE 9 is a top view of the housing shown in Figure 8;
FIGURE 10 shows detail E of Figure 8;
FIGURE 11 is a cross-sectional view of the housing of yet another discharge lamp according to the invention, where the circuit board is parallel to the axis of the discharge lamp and the circuit board holder is in the housing;
FIGURE 12 is a top view of the housing shown in Figure 11;
FIGURE 13 is a cross-sectional view of the housing and the shell of a yet further discharge lamp according to the invention, having circuit board holders in both the shell and the housing; and
FIGURES 14a, 14b and 14c form an exploded view of an alternative arrangement for holding a circuit board in a housing, Figure 14a showing part of a circuit board, Figure 14b showing an adapter, and Figure 14c showing a support in the shell of the ballast housing.

Like reference numerals are used throughout the Figures to identify like parts.

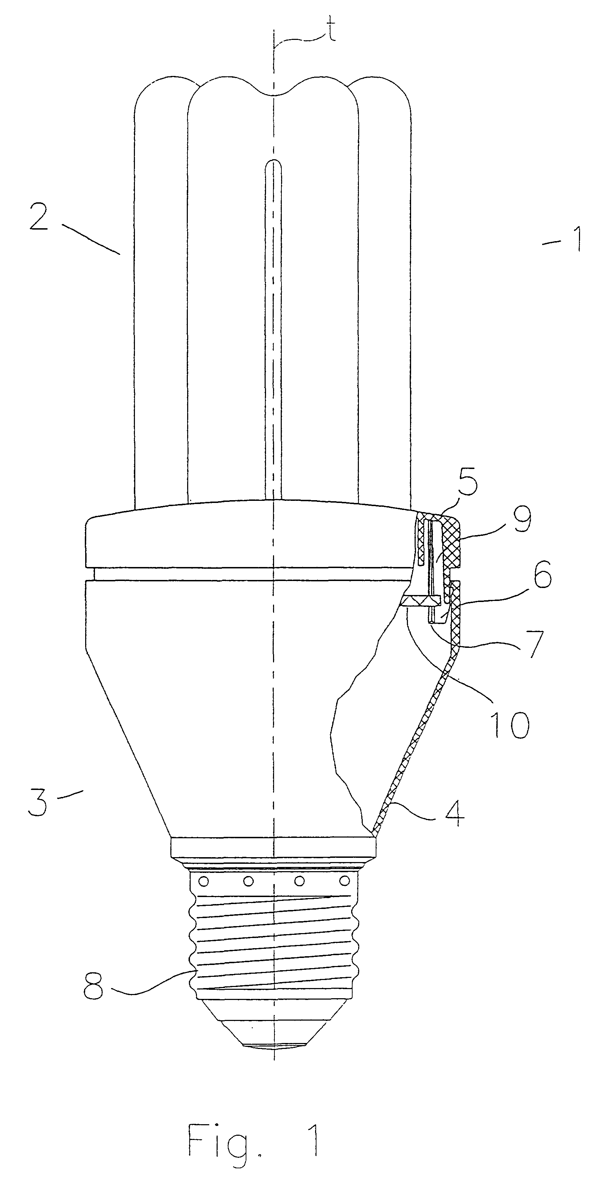

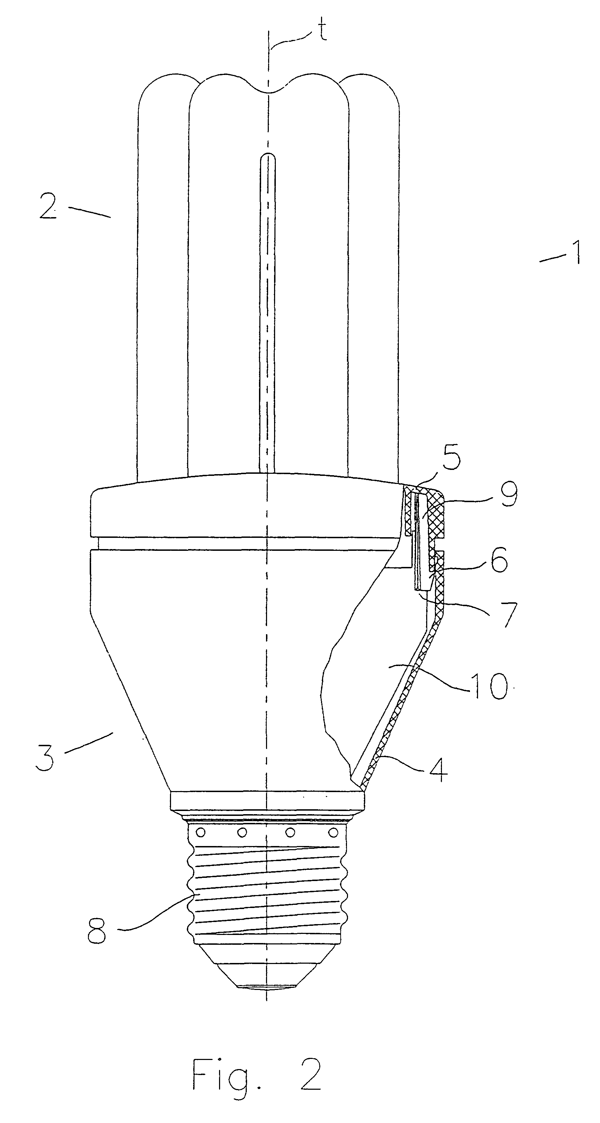

Figures 1 and 2 show, in partial section, illustrative embodiments of a discharge lamp 1 according to the invention. The lamp 1 is a compact fluorescent lamp having a ballast housing 3. The ballast housing 3 has two plastic parts fixed to each other, a housing 4 and a shell 5, and a lamp cap 8 e.g. an Edison screw cap fixed to the housing 4. The discharge tube 2 is fixed in the shell 5. The electronic circuitry or ballast for operating the discharge tube 2 is housed in the housing 3. The components of ballast, or at least some of the components, are fixed on a circuit board 10. In Figure 1 the circuit board 10 is perpendicular to the axis of the discharge lamp 1 while in Figure 2 the circuit board is parallel to the axis of the discharge lamp 1. Both the lamp of Figure 1 and the lamp of Figure 2 have holders 9 formed in the shell 5. The holders 9 hold the circuit board 10 and comprise supports 6 carrying ribs 7.

Two holders 9 are provided, on the opposite sides of shell 5, preferably symmetrically arranged. Only one holder 9 is shown in Figures 1, 3, 4 and 5.

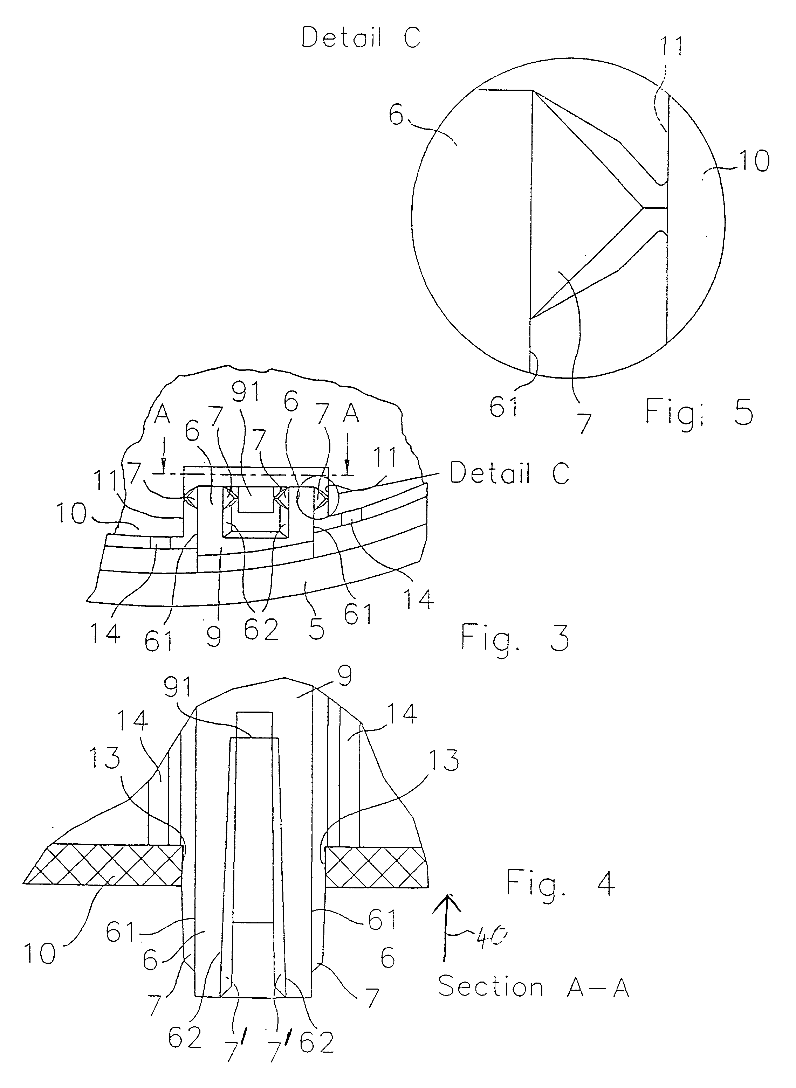

Figures 3, 4 and 5 show the way in which the circuit board 10 is clamped. In the discharge lamp 1 according to Figure 1 Figure 3 shows how the circuit board 10 is clamped perpendicularly to the view of Figure 1 as viewed from the projection plane below the plane of circuit board 10. The holder 9 comprises two supports 6 formed in the shell 5 during injection molding of the shell 5. Ribs 7 are formed on each side of each of the supports 6, one on outer surface 61 and one on inner surface 62. The circuit board 10 has a notch 12, each opposing edge 11 of which engages a rib 7. In Figure 4, the section A-A of the arrangement according to Figure 3 is shown. As shown in Figure 3, the ribs 7 are triangular in cross-section. As shown in Figure 4, the ribs 7 are formed over nearly the entire length of each support 6. It is preferable to form the ribs 7 on the outer surface 61 and ribs 7' on the inner surface 62 of supports 6 because this ensures that the construction can be used both for circuit boards mounted perpendicular to the axis of the lamp 1 and for circuit boards mounted parallel to axis t of the discharge lamp 1. Supports 6 and ribs 7 placed on outer surfaces 61 are formed, as shown in Figure 4, so that in the direction of inserting the circuit board 10 (see the arrow 40) the distance between the outer edges of ribs 7 increases so the circuit board 10 firmly engages the ribs 7. When the circuit board 10 is pushed onto supports 6, the ribs 7 contact the edges 11 of notch 12 and the ribs 7 become more and more deformed along their length. The circuit board 10 pushes before itself the material of the edge of each rib 7 until it becomes stuck. In Figure 4, the material jam produced by the deformation is indicated at 13. The extent of insertion of the circuit board 10 on supports 6 is limited by stops 14 also formed in the shell 5.

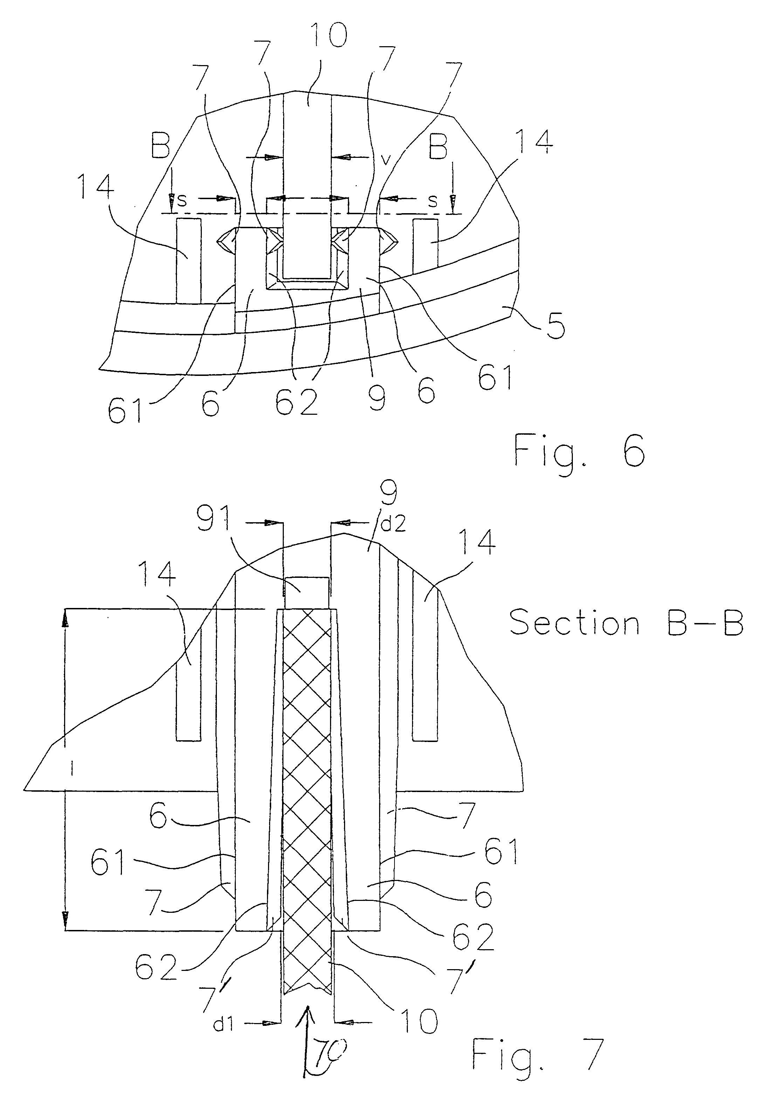

In Figure 5, detail C around one of the ribs 7 shown in Figure 3 is seen enlarged with the circuit board 10 inserted.

Figures 6 and 7 show how the circuit board 10 is fixed in the ballast housing 3 of the discharge lamp 1 parallel to the axis t as shown in Figure 2. Figure 6 is a partial sectional view showing a holder 9 and circuit board 10 viewed from below (i.e. from the end of the ballast housing 3 having cap 8) and Figure 7 is a view along the section B-B of Figure 6.

Holder 9 comprises two supports 6 formed in the plastic shell 5, during injection molding of shell 5. Two holders 9 are formed in the shell 5 on the opposite sides of the shell 5 preferably symmetrically to each other, of which only one holder is shown in Figures 2, 6 and 7. On the outer side of the support 6 are the ribs 7 described above. On the inner sides of the supports 6 are ribs 7'. The circuit board 10 is pushed, in the direction of arrow 70, between ribs 7' on the inner surfaces 62 of support 6 until it reaches a stop surface 91. The ribs 7' and the supports 6 form a channel which converges in the direction of arrow 70 to hold the circuit board 10. The tolerance of the circuit board 10 is taken into account to ensure that even the thinnest and even the thickest circuit board can be firmly held by the ribs 7'. Referring to Figures 6 and 7, dimensions by way of illustration are: the thickness v of the circuit board 10 is 1.6 ± 0.2 mm; the supports 6 on which ribs 7' are placed have a width S of 2 mm; and the insertion length 1 of the circuit board is 10 mm; the width of d₁ between the ribs 7' at the point of insertion is 1.8 mm; and the width of d₂ between the ribs 7' adjacent the stop surface 91 is 1.4 mm.

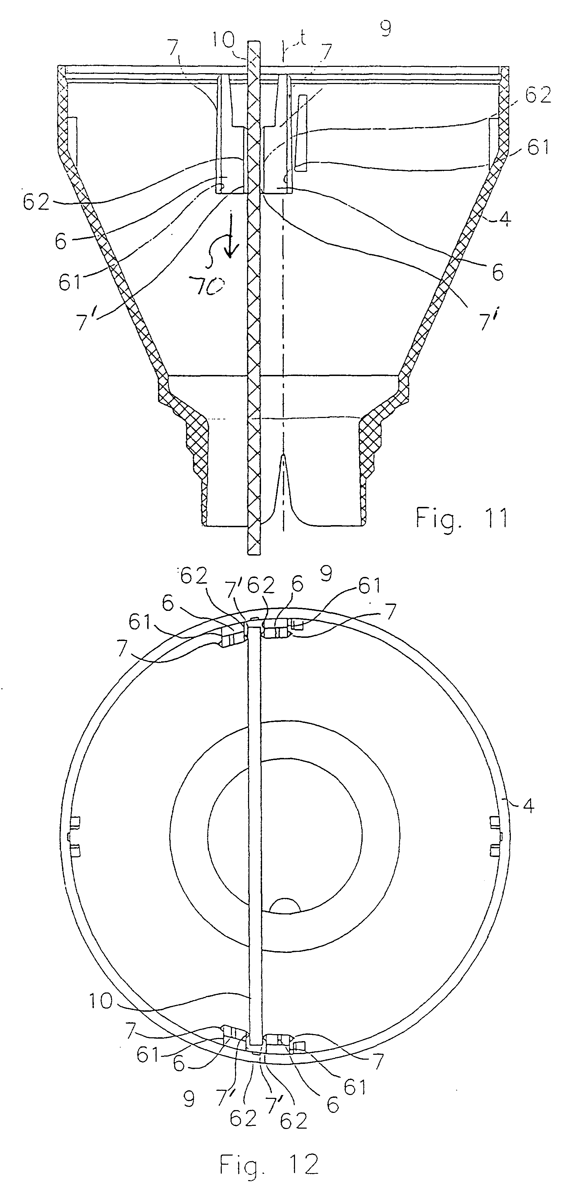

As described hereinbefore with respect to Figures 1 to 7, the holders 9 are provided in the shell 5 of the ballast housing. However, as will now be described with reference to Figures 9 to 12, the holders may be provided in the housing 4.

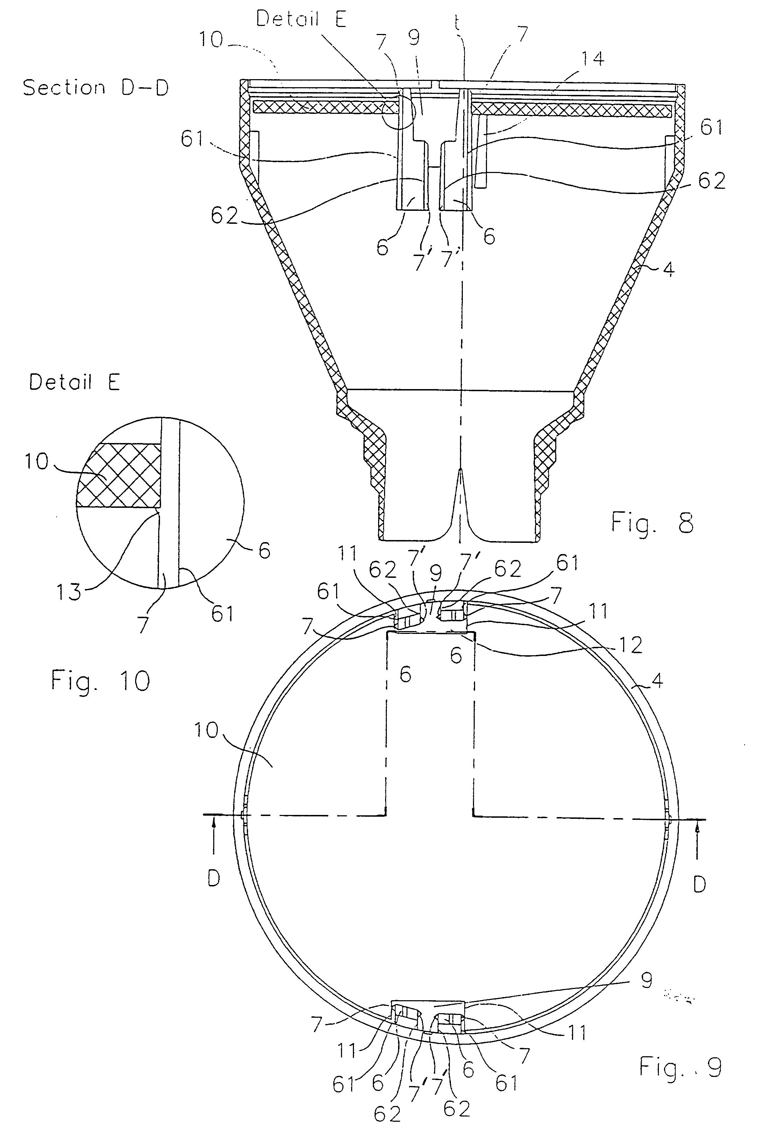

The two holders 9 formed in housing 4 and comprising supports 6 and ribs 7 and 7' on the outer 61 and inner surface 62 thereof are shown in top view in Figure 9 and in Figure 8 on section D-D of Figure 9. In Figures 8 to 10 the circuit board 10 is mounted perpendicularly to the axis t of the lamp.

As shown in Figure 10 which shows on enlarged detail E of Figure 8, when the circuit board 10 is perpendicular to the axis t, it gets stuck on the ribs 7 on the outside surface 61 of supports 6, the ribs 7 engaging the edges 11 of notch 12 in the circuit board 10. When inserting the circuit board 10 onto the holders 9, a material jam 13 takes place as a result of deformation produced on rib 7 as seen in Figure 10. The manner of operation of the holders 9 of Figures 8 to 10 is the same as for the holders 9 of Figures 3 to 5.

Referring to Figures 11 and 12, the circuit board 10 is mounted parallel to the axis t of the lamp. The circuit board 10 is inserted into the holders 9 in the direction of the arrow 70 shown in Figure 11.

The two holders 9 formed in housing 4 and comprising the supports 6 and ribs 7' on the inner surfaces 62 thereof, is seen in front view section in Figure 11 and in top view in Figure 12. The plane of the circuit board 10 is parallel to the axis t. The circuit board 10 is clamped between the ribs 7' formed on the inner surfaces 62 of supports 6. The ribs 7 formed on the outside surfaces 61 has no role in this case. As more clearly shown in Figure 12, edge sections of the circuit board 10 remote from the holders 9 are supported on a conical part of housing 4.

The manner of operation of the holders 9 of Figures 10 and 11 and their dimensions are the same as for the holders of Figures 6 and 7.

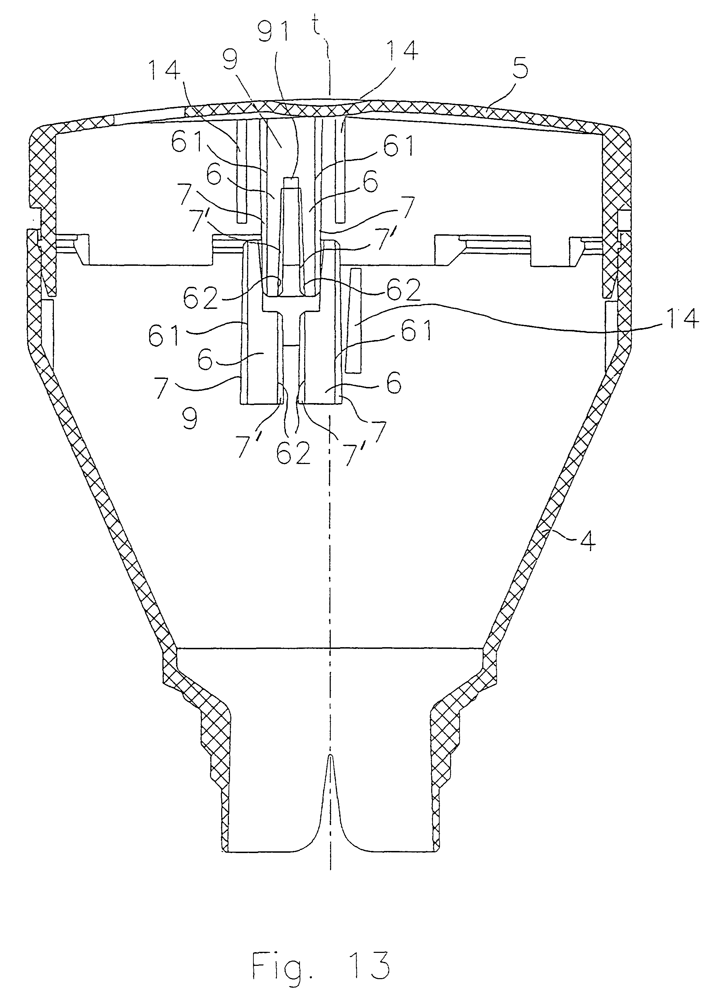

As shown in the illustrative housing of Figure 13, the holders of Figures 3 to 7 in the shell 5 and the holders of Figures 8 to 12 in the housing 4 may both be incorporated into a ballast housing 3.

In Figure 13 the shell 5 and the housing 4 are shown connected by snap connectors but without circuit board 10, mounted in the holders 9. The holders 9 are in both the shell 5 and in the housing 4, preferably two of them in the housing 4 and two in the shell 5. The circuit board 10 can be placed both in the housing 4 and in the shell 5, whether in parallel with or perpendicular to the axis t. Stops 14 limit the final mounting position of the circuit board 10 when oriented perpendicularly to axis t, and stop surface 91 limits the final mounting position of the circuit board 10 when oriented parallel to axis t.

It is not essential for both the shell 5 and the housing 4 to have holders 9. However, this allows changes to the mounting process to be done in a simple way without the need for changes to the construction of the housing 4 or shell 5.

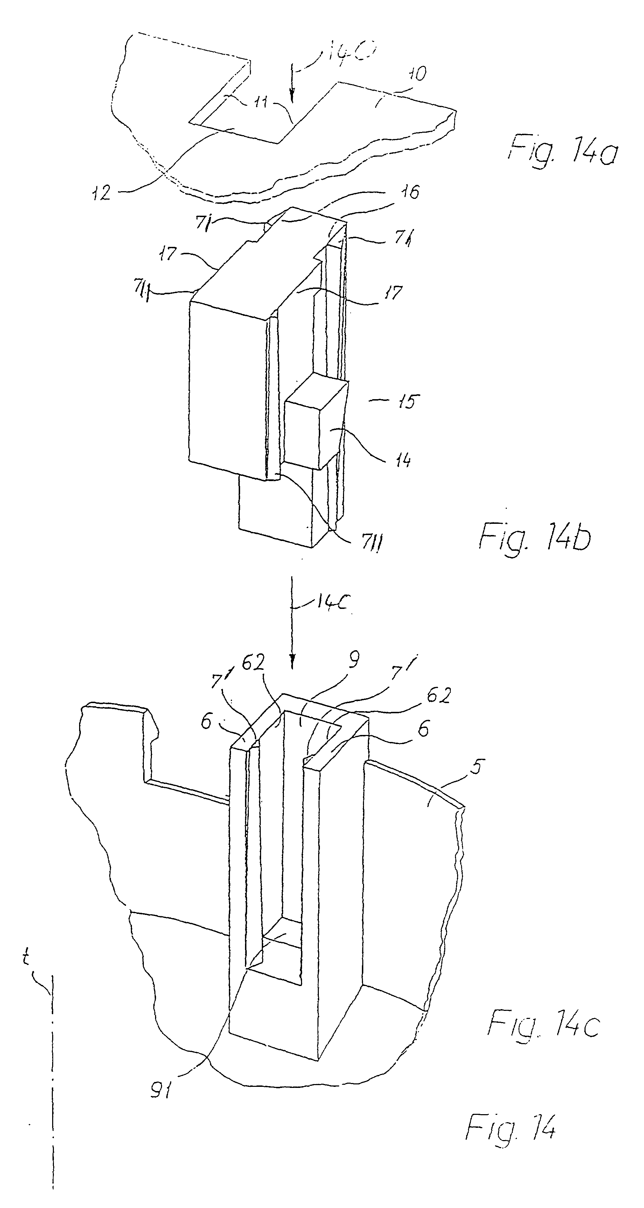

Figure 14 shows that using an adapter piece 15, the mounting process can be changed relatively simply even in case of a non-universally constructed shell (or housing). In Figure 14c, a detail of shell 5 is shown with holder 9 comprising the supports 6 and ribs 7' formed only on the inner surface 62 of the supports. This construction enables a circuit board 10 to be inserted when oriented parallel to the axis t of the discharge lamp. In case of a circuit board 10 oriented perpendicularly to the axis t as shown in Figure 14a, the adapter piece 15 shown in Figure 14b is used. The adapter is inserted into the holder 9 so that surfaces 16 of adapter piece 15 engage the ribs 7' on inner surfaces 62 of supports 6 and inner surface 62 engages ribs 71 formed on the surfaces of the adapter. The extent to which adapter piece 15 moves is limited by stop surface 91. The ribs on the outer surface 16 of the adapter converge in the direction of the arrow 140 in Figure 14a. The ribs 7' on the internal surface 62 of the holder 9 also converge in the direction of the arrow 140 in Figure 14c. Thus the adapter and the holder fix together by a wedging action. The two parallel ribs 7 ensure that adapter piece 15 is firmly fixed in holder 9. Edges of notch 11 in the circuit board 10 according to Figure 14a engage ribs 711 on the surfaces 17 of the adapter piece 15. The circuit board 10 may be pushed onto the adapter 15 in the direction of arrow 140 until it engages stops 14.

The discharge lamps described by way of example above have a mechanical construction for fixing a circuit board in the lamp housing and which allows for variations in the dimensions of the circuit board. In addition, versions of the construction allow a circuit board to be selectively oriented in parallel to the axis of the lamp or perpendicular to the axis of the discharge lamp. The construction can be used in the housing and/or in the shell. Dimensional variations in the circuit board are compensated for by means of mechanical deformation of the ribs during fixing of the circuit board in the housing, which makes the assembling operations more efficient.

The discharge lamp according to our invention can be constructed in several ways, and in accordance with this our invention is not intended to be limited to the examples described hereinabove.

## Claims

1. A discharge lamp (1) comprising a ballast housing (3), a discharge tube (2) supported by the ballast housing (3), and circuitry coupled to the tube (2) for operating the lamp (1), at least part of the circuitry being on a circuit board (10) supported by at least one circuit board holder (9) fixed to the ballast housing (3), the holder (9) having ribs (7) engaging opposite edge portions of the circuit board (10) an insertion thereof into the holder (9), **characterised in that** the holder (9) and ribs (7) are dimensioned such that in the direction of insertion the space available for the circuit board (10) decreases, thereby producing a wedging action to fix the board (10) to the holder (9).

2. A lamp according to claim 1, wherein the circuit board (10) has a notch (12) in an edge portion thereof, the holder (9) being inserted into the notch (12), the notch (12) having opposed internal edges (11) engaging the said ribs (7), the ribs (7) extending transversely of the plane of the board (10).

3. A lamp according to claim 2, wherein the ribs (7) are on opposite sides of a support (6).

4. A lamp according to claim 1, wherein the ribs (7) engage opposite major surfaces of the circuit board (10), the circuit board (10) being inserted into the holder (9) between the ribs (7).

5. A lamp according to claim 4, wherein the ribs (7) are on respective spaced apart supports (6).

6. A lamp according to claim 2, 3, 4 or 5, wherein the holder (9) further comprises a stop (14) for limiting the extent of insertion of the holder (9) into the notch (12) or of the board (10) into the holder (9).

7. A lamp according to claim 1, 2, 3, 4, 5 or 6, wherein the ribs (7) are deformed by the circuit board (10).

8. A lamp according to any preceding claim, wherein the ribs (7) are triangular in cross-section.

9. A lamp according to any preceding claim, wherein the holder (9) is inserted into a slot in the housing.

10. A lamp according to any preceding claim comprising a plurality of holders (9), each as defined in any preceding claim.

## Patentansprüche

1. Entladungslampe (1) enthaltend ein Vorschaltgehäuse (3), eine Entladungsröhre (2), die von dem Vorschaltgehäuse (3) gehaltert ist, und eine mit der Röhre (2) verbundene Schaltungsanordnung zum Betreiben der Lampe (1), wobei wenigstens ein Teil der Schaltungsanordnung auf einer Schaltkarte (10) ist, die von wenigstens einem Schaltkartenhalter (9) gehaltert ist, der an dem Vorschaltgehäuse (3) befestigt ist, wobei der Halter (9) Rippen (7) aufweist, die mit gegenüberliegenden Randabschnitten der Schaltkarte (10) beim Einsatz in den Halter (9) in Eingriff sind, **dadurch gekennzeichnet, daß** der Halter (9) und die Rippen (7) so dimensioniert sind, daß in der Einsetzrichtung der Raum, der für die Schaltkarte (10) verfügbar ist, kleiner wird, wodurch eine Keilwirkung zum Befestigen der Karte (10) an dem Halter (9) ausgebildet wird.

2. Lampe nach Anspruch 1, wobei die Schaltkarte (10) eine Kerbe (12) in ihrem Randabschnitt aufweist, der Halter (9) in die Kerbe (12) eingesetzt ist, die Kerbe (12) gegenüberliegende innere Ränder (11) hat, die an den Rippen (7) angreifen, wobei sich die Rippen (7) quer zu der Ebene der Karte (10) erstrekken.

3. Lampe nach Anspruch 2, wobei die Rippen (7) auf gegenüberliegenden Seiten einer Halterung (6) sind.

4. Lampe nach Anspruch 1, wobei die Rippen (7) an gegenüberliegenden Hauptflächen der Schaltkarte (10) angreifen, wobei die Schaltkarte (10) in den Halter (9) zwischen den Rippen (7) eingesetzt ist.

5. Lampe nach Anspruch 4, wobei die Rippen (7) auf entsprechenden, im Abstand angeordneten Haltern (6) sind.

6. Lampe nach Anspruch 2, 3, 4 oder 5, wobei der Halter (9) ferner einen Anschlag (14) aufweist zum Begrenzen der Ausdehnung des Einsetzens des Halters (9) in die Kerbe (12) oder von der Karte (10) in den Halter (9).

7. Lampe nach Anspruch 1, 2, 3, 4, 5 oder 6, wobei die Rippen (7) durch die Schaltkarte (10) deformiert sind.

8. Lampe nach einem der vorstehenden Ansprüche, wobei die Rippen (7) einen dreieckigen Querschnitt haben.

9. Lampe nach einem der vorstehenden Ansprüche, wobei der Halter (9) in einen Schlitz in dem Gehäuse eingesetzt ist.

10. Lampe nach einem der vorstehenden Ansprüche, wobei mehrere Halter (9) vorgesehen sind, jeder wie in einem der vor stehenden Ansprüche definiert.

## Revendications

1. Lampe à décharge (1) comprenant un boîtier de ballast (3), un tube à décharge (2) supporté par le boîtier de ballast (3), et des circuits couplés au tube (2) pour faire fonctionner la lampe (1), au moins une partie des circuits se trouvant sur une carte imprimée (10) supportée par au moins un support (9) de carte imprimée fixé au boîtier de ballast (3), le support (9) ayant des nervures (7) qui coopèrent avec des parties de bord opposées de la carte imprimée (10) lors de l'insertion de cette dernière dans le support (9), **caractérisée en ce que** le support (9) et les nervures (7) sont dimensionnés de telle sorte que dans le sens d'insertion, l'espace disponible pour la carte imprimée (10) diminue, produisant de ce fait une action de coincement pour fixer la carte (10) dans le support (9).

2. Lampe selon la revendication 1, dans laquelle la carte imprimée (10) comporte une encoche (12) dans une de ses parties de bord, le support (9) étant inséré dans l'encoche (12), l'encoche (12) ayant des bords internes opposés (11) qui coopèrent avec lesdites nervures (7), les nervures (7) s'étendant transversalement au plan de la carte (10).

3. Lampe selon la revendication 2, dans laquelle les nervures (7) sont sur des côtés opposés d'un support (6).

4. Lampe selon la revendication 1, dans laquelle les nervures (7) coopèrent avec des surfaces principales opposées de la carte imprimée (10), la carte imprimée (10) étant insérée dans le support (9) entre les nervures (7).

5. Lampe selon la revendication 4, dans laquelle les nervures (7) sont sur des supports (6) respectifs espacés les uns des autres.

6. Lampe selon la revendication 2, 3, 4 ou 5, dans laquelle le support (9) comprend en outre une butée (14) pour limiter l'étendue d'insertion du support (9) dans l'encoche (12) ou de la carte (10) dans le support (9).

7. Lampe selon la revendication 1, 2, 3, 4, 5 ou 6, dans laquelle les nervures (7) sont déformées par la carte imprimée (10).

8. Lampe selon l'une quelconque des revendications précédentes, dans laquelle les nervures (7) sont de section triangulaire.

9. Lampe selon l'une quelconque des revendications précédentes, dans laquelle le support (9) est inséré dans une fente réalisée dans le boîtier.

10. Lampe selon l'une quelconque des revendications précédentes, comprenant une pluralité de supports (9), chacun tel que défini dans l'une quelconque des revendications précédentes.
